# EUROPÄISCHE PATENTSCHRIFT

(11) **EP 1 096 461 B1**
(45) Veröffentlichungstag und Bekanntmachung des Hinweises auf die Patenterteilung: **02.05.2012**
(21) Anmeldenummer: 00122007.8
(22) Anmeldetag: 09.10.2000
(51) Int. Cl.: G09B 9/04, G09B 9/12

(54) **Bewegungssystem**
Motion system
Système à mouvement

(30) Priorität: 28.10.1999 DE 19951919
(43) Veröffentlichungstag der Anmeldung: 02.05.2001
(73) Patentinhaber: Rheinmetall Defence Electronics GmbH, 28309 Bremen (DE)
(72) Erfinder: Wilkens, Rolf, 28211 Bremen (DE)
(74) Vertreter: Thul, Hermann

(56) Entgegenhaltungen:
- DE-A1- 3 643 445
- DE-C1- 19 542 869
- DE-C1- 19 807 197
- FR-A- 2 677 155
- US-A- 3 436 841

## Beschreibung

Die Erfindung betrifft ein Bewegungssystem zur Bewegung einer Plattform, insbesondere eine Vorrichtung zur Simulation von Fahrzeugbewegungen, der im Oberbegriff des Anspruchs 1 definierten Gattung.

Bei einer bekannten Vorrichtung zur Simulation von Längs- und Querbeschleunigungen an einer Fahrzeugkabine (DE 195 42 869 C1) sind die zur unteren Bewegungsebene zugehörigen Schienen auf einem raumfesten Grundrahmen und die zur oberen Bewegungsebene zugehörigen Schienen auf der dem Grundrahmen zugekehrten Unterseite der die Fahrzeugkabine tragenden Plattform angeordnet. Die oberen und unteren Schienen sind jeweils paarweise vorhanden, und jedes Schienenpaar ist winkelförmig von der Mitte zum vorderen und hinteren Ende jeweils ansteigend ausgebildet, wobei die beiden Schienenpaare rechtwinklig zueinander angeordnet sind. Auf jeder der abgewinkelten Schienen läuft ein Paar im festen Längsabstand voneinander angeordneten Laufwagen, wobei die Laufwagen der oberen Schienen mit jeweils einem Laufwagen der unteren Schienen über eine bewegliche Verbindung mit drei Rotationsachsen zu einer Laufwageneinheit gekoppelt sind. Damit sind vier Laufwageneinheiten vorhanden, von denen jeweils zwei angetrieben werden, und zwar zwei Laufwagen längs den unteren Schienen und zwei Laufwagen längs den oberen Schienen.

Der Erfindung liegt die Aufgabe zugrunde, ein Bewegungssystem der eingangs genannten Art zu schaffen, das eine sehr gute Nachbildung gewünschter, tatsächlich auftretender Bewegungen an der Plattform ermöglicht, das darüber hinaus so konzipiert ist, daß die Plattform mit geringer Masse ausgeführt werden und so entweder eine hohe Nutzlast aufnehmen oder mit relativ geringer Antriebsleistung bewegt, insbesondere beschleunigt, werden kann, und das robust und mit relativ geringen Gestehungskosten realisierbar ist.

Die Aufgabe ist durch die Merkmale im Anspruch 1 gelöst.

Das erfindungsgemäße Bewegungssystem, das eine Bewegung der Plattform in drei Freiheitsgraden erlaubt, hat den Vorteil, daß durch die unmittelbar an der Unterseite der Plattform ohne Zwischenträger angeordneten oberen Schienen die obere Bewegungsebene aus Plattform und Schienen eine extrem kleine Masse aufweist und dadurch eine hohe Nutzlast, wie z.B. bei einem Fahrzeugsimulator Fahrerkabine mit oder ohne Kabinenbewegungssystem und Sichtsystem, aufnehmen kann. Die Abstützung der hohen Nutzlast erfolgt durch die Konstruktion selbst und nicht durch Aktuatoren oder die Antriebe zur Bewegung der Plattform. Durch die beschriebene Schienenkonstruktion besitzt das Bewegungssystem eine extrem niedrige Bauhöhe.

Das Bewegungssystem weist eine robuste und stabile Konstruktion auf und ist kostengünstig zu fertigen, da auch gebogene Führungsschienen im Handel mit diversen Abmessungen erhältlich sind. Die vorzugsweise kreisrunde Plattform läßt sich aus gleichen Kreissegmenten einfach zusammensetzen. Die erforderlichen Antriebe zum Bewegen der Plattform, deren Anzahl der Zahl der Laufwageneinheiten entspricht, können mittels handelsüblicher Getriebemotoren realisiert werden.

Zweckmäßige Auführungsformen des erfindungsmäßigen Bewegungssystems mit vorteilhaften Weiterbildungen und Ausgestaltungen der Erfindung ergeben sich aus den weiteren Ansprüchen.

Gemäß einer vorteilhaften Ausführungsform der Erfindung sind die unteren Schienen in einer Ebene angeordnet und die beweglichen Verbindungen zwischen den Laufwagen der Laufwageneinheiten als Drehlager mit zur Hochachse der Plattform paralleler Lagerachse ausgebildet. Vorzugsweise sind dabei die unteren Schienen auf einem flachen, ebenen Fundament befestigt. Mit dieser Systemvariante kann die Plattform längs- und querverschoben werden, wobei zusätzlich den Tanslationsbewegungen eine Drehbewegung überlagert werden kann. In jeder Verschiebeposition kann die Plattform auch ausschließlich um ihre Hochachse gedreht werden. Anwendung für ein solches Bewegungssystem bietet neben der Simulation von Fahrzeugbewegungen auch der Werkzeugbau und die Robotik. Durch Modifikationen an Form und Anordnung der Schienen kann der Bewegungsablauf in Grenzen beeinflußt werden.

Gemäß einer bevorzugten Ausführungsform der Erfindung sind die unteren Schienen auf keilförmig ansteigenden Rampen oder auf der inneren Trichterwand einer trichterförmigen Grundkonsole befestigt. Die bewegliche Verbindung zwischen den Laufwagen einer Laufeinheit weist dann drei orthogonale Rotationsachsen auf. Vorzugsweise ist diese bewegliche Verbindung durch ein Kugelgelenk realisiert, möglich ist auch ein um die Hochachse drehbares Kreuzgelenk. Zweckmäßigerweise werden drei Rampen vorgesehen, die in einem als Stahlkonstruktion ausgeführten Grundrahmen eingebunden sind. Die Lage und Ausrichtung des Grundrahmens bei der Montage ist unkritisch, da eine Dreieckskonstruktion stets stabil ist. Mit dieser Systemvariante kann die Plattform ausschließlich um ihre Hochachse gedreht und rein translatorisch oder translatorisch mit überlagerter Drehbewegung in Längs- und Querrichtung bei gleichzeitiger Neigung verschoben werden. Dabei sind bei entsprechender Wahl der Steigungen der unteren Schienen und der Plattformabmessungen (bei einer kreisrunden Plattform deren Durchmesser) große Auslenkungen möglich. Gierbewegungen der Plattform sind ebenfalls darstellbar. Diese Systemvariante wird bevorzugt in Simulatoren zur Nachbildung von Fahrbewegungen eines Landfahrzeuges angewendet. Durch die gleichzeitige Neigung der Plattform bei der translatorischen Verschiebung kann die Wirkung der Schwerkraft auf den in der Fahrzeugkabine plazierten Fahrer zur Nachbildung langanhaltender Beschleunigungen genutzt werden. Vertikalbeschleunigungen können unterhalb der Wahrnehmungsgrenze gehalten werden.

Die Erfindung ist anhand von in der Zeichnung dargestellten Ausführungsbeispielen im folgenden näher beschrieben. Es zeigen:
- Fig. 1: eine der Erläuterungen der Funktionsweise dienende schematisierte Draufsicht eines Bewegungssystems gemäß einem ersten Ausführungsbeispiel,
- Fig. 2: eine mehr konstruktive Darstellung der Draufsicht des Ausschnitts II in Fig. 1 bei entfernter Plattform,
- Fig. 3: ausschnittweise einen Schnitt längs der Linie III - III in Fig. 2 des Bewegungssystems mit Plattform,
- Fig. 4: ausschnittweise einen Schnitt längs der Linie IV - IV in Fig. III,
- Fig. 5: eine schematisierte Seitenansicht in Richtung Pfeil V in Fig. 7 eines Bewegungssystems gemäß einem zweiten Ausführungsbeispiel,
- Fig. 6: eine schematisierte Ansicht in Richtung Pfeil VI in Fig. 7,
- Fig. 7: eine schematisierte Unteransicht in Richtung Pfeil VII in Fig. 5,
- Fig.8: eine vergrößerte Darstellung des Schnitts VIII - VIII in Fig. 7.

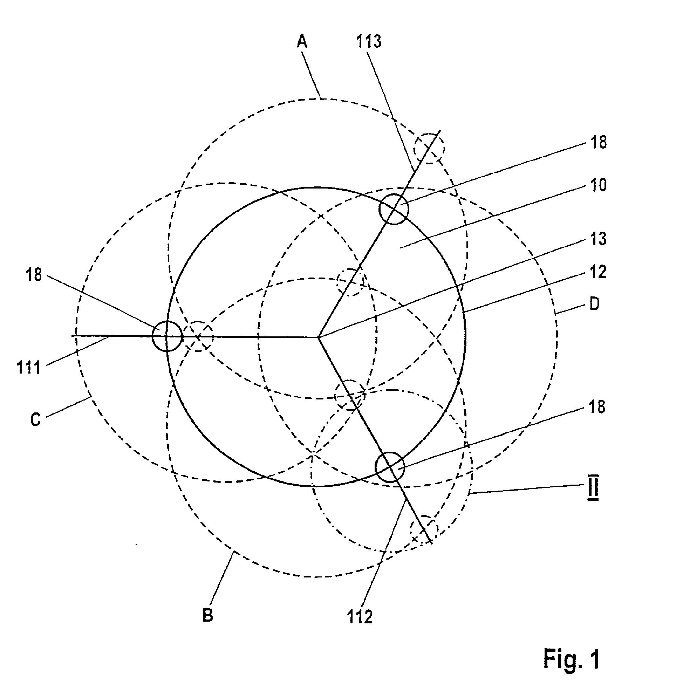

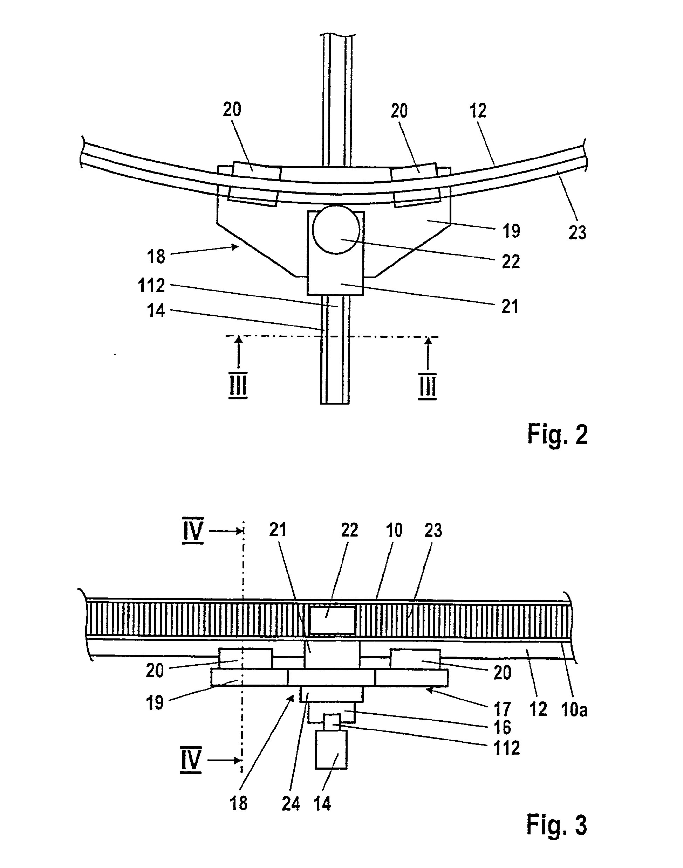

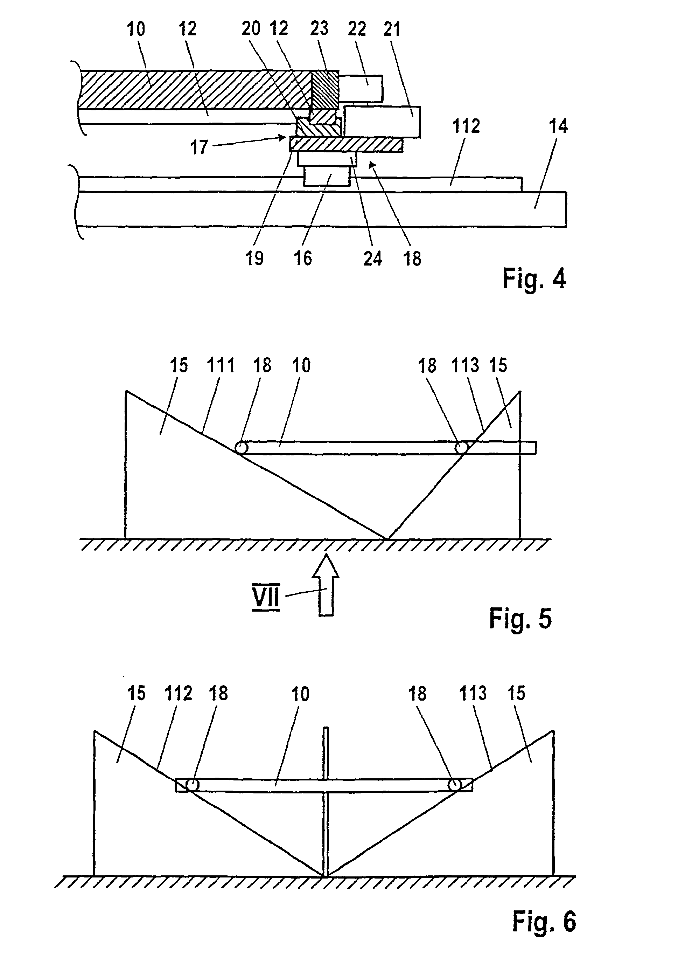

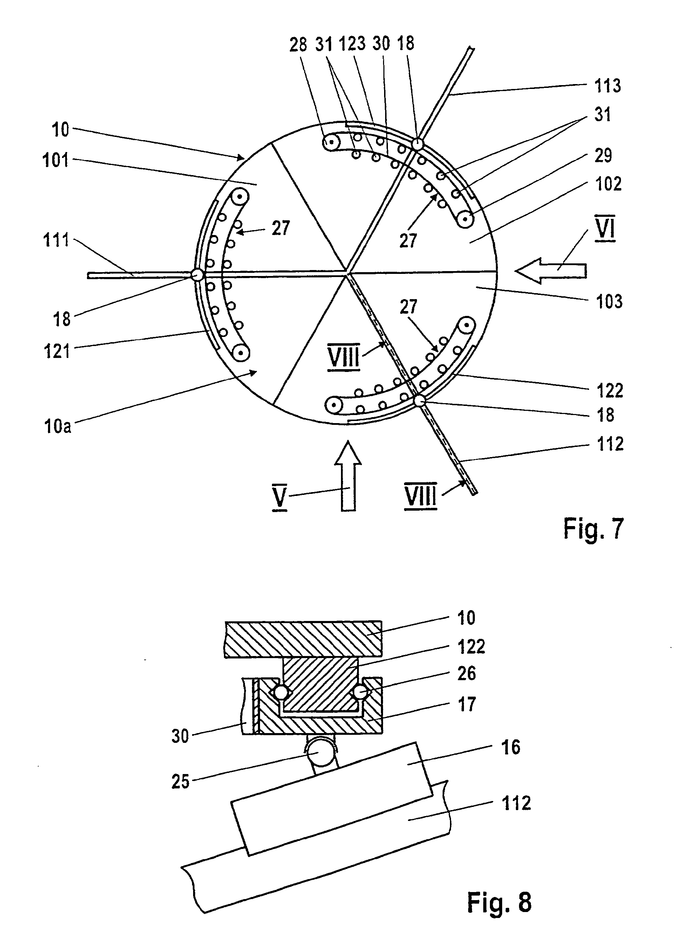

Das in Fig. 1 bis 4 und Fig. 5 bis 8 in zwei Ausführungsbeispielen dargestellte Bewegungssystem zur Bewegung einer Plattform 10 weist in zwei übereinanderliegenden Bewegungsebenen angeordnete Schienen auf, von denen die unteren Schienen 111, 112, 113 raumfest verlegt und die oberen Schienen 12 (Fig. 1 bis 4) bzw. 121, 122, 123 (Fig. 7) auf der den unteren Schienen 111 bis 113 zugekehrten Unterseite 10a (Fig. 3 und 4) der Plattform 10 befestigt sind. Die hier drei unteren Schienen 111 bis 113 sind sternförmig zueinander angeordnet und um gleiche Drehwinkel zueinander versetzt ausgerichtet, während die oberen Schienen 12 bzw. 121 bis 123 bogenförmig ausgebildet und auf einer Kreisbahn miteinander fluchtend ausgerichtet sind. Im Ausführungsbeispiel der Fig. 1 sind die oberen Schienen so ausgebildet, daß sie endseitig aneinanderstoßen und eine einstückige Kreisschiene 12 bilden. Im Ausführungsbeispiel der Fig. 1 bis 4 sind die drei unteren Schienen in einer Ebene angeordnet und dabei vorzugsweise auf einem ebenen Fundament 14 befestigt, während in dem Ausführungsbeispiel der Fig. 5 bis 8 die Schienen 111 bis 113 auf keilförmig ansteigenden Rampen 15 befestigt sind, deren Steigung gleich und frei wählbar ist. Anstelle von hier nicht dargestellten einzelnen Rampen 15 können die Schienen 111 bis 113 auch auf der inneren Trichterwand einer trichterförmigen Grundkonsole befestigt werden. Die Plattform 10 ist vorzugsweise kreisrund ausgebildet und aus drei Kreissegmenten 101, 102, 103 zusammengesetzt, und die oberen Schienen 121, 122, 123 bzw. die Kreisschiene 12 sind konzentrisch zur Hochachse 13 der Plattform 10 unmittelbar auf der Plattform 10 festgelegt.

In dem Ausführungsbeispiel der Fig. 1 bis 4 ist auf jeder der drei unteren Schienen 111 bis 113 jeweils ein unterer Laufwagen 16 und sind auf der Kreisschiene 12 insgesamt drei obere Laufwagen 17 verfahrbar. Die Zahl der oberen Laufwagen 17 richtet sich nach der Anzahl der unteren Laufwagen 16. Jeweils ein unterer Laufwagen 16 ist mit einem oberen Laufwagen 17 über eine bewegliche Verbindung zu einer Laufwageneinheit 18 zusammengefaßt, wie dies in Fig.2 bis 4 dargestellt ist. In Fig. 1 sind die Laufwageneinheiten 18 lediglich symbolisch durch einen Kreis angedeutet. Fig. 2 zeigt eine konstruktive Darstellung des vergrößerten Ausschnitts II in Fig. 1 mit der Laufwageneinheit 18, die einerseits auf der unteren Schiene 112 und andererseits auf der oberen Kreisschiene 12 verfahrbar ist. Die übrigen beiden Laufwageneinheiten 18, die den unteren Schienen 111 und 113 zugeordnet sind, sind identisch ausgebildet. Bei der Darstellung in Fig. 2 ist die Plattform 10 der Übersichtlichkeit halber weggelassen. Fig. 3 und Fig. 4 zeigen entsprechende Schnitte des Ausschnitts II bei montierter Plattform 10, die in gleicher Weise für die beiden anderen Laufwageneinheiten 18 gelten.

Wie aus Fig. 2 bis 4 ersichtlich ist, weist der obere Laufwagen 17 einen Träger 19 auf, auf dessen der oberen Kreisschiene 12 zugeordneten Oberfläche zwei gleiche, mit Abstand voneinander angeordnete Gleit- oder Rollenschuhe 20 angeordnet sind, die jeweils die obere Kreisschiene 12 übergreifen. Zwischen den beiden Gleit- oder Rollenschuhen 20 ist auf dem Träger 19 ein elektrischer Getriebemotor 21 befestigt, auf dessen Abtriebswelle ein Zahnritzel 22 drehfest sitzt. Das Zahnritzel 22 kämmt mit einer kreisbogenförmigen, zur Hochachse 13 der Plattform 10 konzentrischen Zahnleiste 23, die auf der Plattform 10 angeordnet ist. Im Ausführungsbeispiel der Fig. 2 bis 4 ist die Zahnleiste 23 am Umfang der kreisförmigen Plattform 10 ausgebildet. Die bewegliche Verbindung zwischen dem oberen Laufwagen 17 und dem unteren Laufwagen 16 ist durch ein Drehlager 24 hergestellt, das einerseits an der Unterseite des Trägers 19 und andererseits auf der Oberseite des Laufwagens 16 befestigt ist und dessen Lagerachse parallel zur Hochachse 13 der Plattform 10 ausgerichtet ist.

Die Funktionsweise des Bewegungssystems ist in Fig. 1 verdeutlicht. Ausgehend von der in Fig. 1 ausgezogen darstellten Grundposition kann die Plattform 10 durch entsprechende Ansteuerung der Getriebemotoren 21 in Längs- und Querichtung verschoben werden, wobei noch zusätzlich der Translationsbewegung wahlweise eine Drehbewegung um die Hochachse 13 überlagert werden kann. Zur Verdeutlichung der Funktionsweise sind in Fig. 1 verschiedene Plattformpositionen mit A, B, C und D strichliniert angedeutet. Werden z.B. die mit der Zahnleiste 23 kämmenden Zahnritzel 22 von den Getriebemotoren 21 auf den drei Laufwageneinheiten 18 mit unterschiedlichen, aber aufeinander abgestimmten Drehwinkeln angetrieben, so läßt sich die Plattform 10 ohne jegliche Drehung in ihre Position A verschieben. Werden dabei die Drehrichtungen der Getriebemotoren 21 der Laufwageneinheiten 18 auf den unteren Schienen 111, 112, 113 umgekehrt, so verschiebt sich die Plattform 10 ohne jegliche Drehbewegung in die Position B. Will man bei der Verschiebung der Plattform 10 in die Position A oder Position B der Translationsbewegung eine Drehbewegung überlagern, so bleibt der Getriebemotor 21 der Laufwageneinheit 18 auf der unteren Schiene 111 abgeschaltet. Je nachdem welcher der Getriebemotoren 21 der Laufwageneinheiten 18 auf den beiden unteren Schienen 112 und 113 mit dem größeren Drehwinkel dreht, schwenkt die Plattform 10 um die Laufwageneinheit 18 auf der unteren Laufschiene 111 in die Position A oder B. Alternativ kann die gleiche Schwenkbewegung der Plattform 10 auch dadurch bewirkt werden, daß alle drei Getriebemotoren 21 der Laufwageneinheiten 18 aktiviert werden und die Plattform 10 um entsprechende Winkel in die eine oder andere Richtung drehen. Die von den Laufwageneinheiten 18 auf den einzelnen Schienen eingenommene Stellungen sind für die Position A strichliniert und für Position B strichpunktiert angedeutet. Soll die Plattform 10 längsverschoben werden, z.B. in die Position C und D, so bleibt der Getriebemotor 21 der Laufwageneinheit 18 auf der Schiene 111 abgeschaltet, und die beiden Getriebemotoren 21 der Laufwageneinheiten 18 auf den Schienen 112 und 113 werden mit gleich großem Drehwinkel in inverser Drehrichtung angetrieben. Je nach Drehrichtung der Getriebemotoren 21 wird die Plattform 10 ohne Überlagerung einer Drehung in die Position C oder in die Position D verschoben. Wird z.B. nur der Getriebemotor 21 der auf der Schiene 111 verfahrbaren Laufwageneinheit 18 eingeschaltet und die Getriebemotoren 21 der beiden anderen Laufwageneinheiten 18 bleiben inaktiv, so verschiebt und verdreht sich die Plattform 10 so, daß der Abstand zwischen den Laufwageneinheiten 18 mit den inaktiven Getriebemotoren 21 konstant bleibt und die Abstände zwischen der antreibenden Laufwageneinheit 18 und den beiden anderen Laufwageneinheiten 18 sich verändern. Dadurch verschieben sich die Laufwageneinheiten 18 auf den Schienen 111, 112 und 113 und die Plattform 10 wird gedreht und verschoben. In jeder Position kann die Plattform 10 durch synchronen Lauf aller drei Getriebemotoren 21 ohne Positionsverschiebung um ihre Hochachse 13 gedreht werden.

Bei dem Ausführungsbeispiel des Bewegungssystems gemäß Fig. 5 bis 8 mit nicht in einer Ebene sondern auf ansteigenden Rampen 15 angeordneten unteren Schienen 111 bis 113 sowie mit drei einzelnen an der Unterseite 10a der Plattform 10 auf einem Kreisbogen fluchtend angeordneten oberen Schienen 121 bis 123 ist wiederum auf jeder unteren Schiene 111 bis 113 ein unterer Laufwagen 16 und auf jeder oberen Schiene 121 bis 123 ein oberer Laufwagen 17 verfahrbar. Die Laufwagen 16, 17 sind wiederum über eine gelenkige Verbindung zu einer Laufwageneinheit 18 zusammengefaßt. Die gelenkige Verbindung weist hier drei orthogonale Rotationsachsen auf und ist - wie dies in Fig. 8 zu sehen ist - durch ein Kugelgelenk 25 realisiert. Anstelle eines Kugelgelenks 25 kann auch ein um die Hochachse 13 drehbares Kreuzgelenk verwendet werden. Wie in Fig. 8 dargestellt ist, übergreift jeder Laufwagen 16 bzw. 17 die zugeordnete Schiene 111 bis 113 bzw. 121 bis 123 und stützt sich über Wälzelemente 26 an der Schiene 111 bis 113 bzw. 121 bis 123 ab. In Fig. 5 bis 7 sind die insgesamt drei Laufwageneinheiten 18 nur durch Kreise angedeutet.

Die zwischen den Laufwageneinheiten 18 und der Plattform 10 erforderlichen Drehantriebe sind hier als Riementriebe 27 ausgebildet, die auf der Unterseite 10a der Plattform 10 angeordnet sind. Wie in Fig. 7 schematisch dargestellt ist, weist jeder Riementrieb 27 eine elektromotorisch angetriebene Antriebswalze 28 und eine davon in Umfangsrichtung der Plattform 10 beabstandet angeordnete Umlenkrolle 29 sowie ein über die Antriebswalze 28 und die Umlenkrolle 29 geführtes Endlosband 30 auf. An dem Endlosband 30 ist der obere Laufwagen 17 der zugeordneten Laufwageneinheit 18 starr befestigt (Fig. 8). Das Endlosband 30 ist zwischen Antriebswalze 28 und Umlenkrolle 29 auf einem Kreisbogenabschnitt geführt, wozu Führungsrollen 31 vorgesehen sind, die an der Unterseite 10a der Plattform 10 längs eines Kreisbogenabschnittes voneinander beabstandet angeordnet sind.

Die Bewegung der Plattform 10 wird bei diesem Ausführungsbeispiel des Bewegungssystems in gleicher Weise wie bei dem zuvor beschriebenen Bewegungssystem durch Aktivieren aller oder nur ausgewählter Riementriebe 27 erzeugt. Dabei werden die gleichen translatorischen und rotatorischen Bewegungen der Plattform 10 erzeugt, denen zudem noch eine Neigung der Plattform 10 überlagert wird, so daß auch hier eine Vielzahl von Bewegungen simuliert werden kann. Durch die Riementriebe 27 ist jedoch die Drehung um die Hochachse eingeschränkt.

Bei den beschrieben beiden Ausführungsbeispielen des Bewegungssystems können die jeweils beschriebenen Drehantriebe ausgetauscht werden und so die Riemenantriebe 27 des zweiten Bewegungssystems bei dem ersten Bewegungssystem und die Getriebemotoren 21 mit Zahnritzel 22 und Zahnleiste 23 des ersten Bewegungssystems in dem zweiten Bewegungssystem eingesetzt werden.

## Patentansprüche

1. Bewegungssystem zur Bewegung einer Plattform (10), insbesondere Vorrichtung zur Simulation von Fahrzeugbewegungen, mit einer Plattform (10), insbesondere zur Aufnahme einer Fahrzeugkabine, mit In zwei übereinanderliegenden Bewegungsebenen angeordneten Schienen (11, 12), von denen die unteren raumfest verlegt und die oberen auf der den unteren Schienen (11) zugekehrten Unterseite der Plattform (10) befestigt sind, mit auf den Schienen (11, 12) verfahrbaren Laufwagen (16, 17), von denen jeweils einer einer Schiene zugeordnet und jeder der auf den oberen Schienen (12) verfahrbaren oberen Laufwagen (17) mit einem der auf den unteren Schienen (11) verfahrbaren unteren Laufwagen (16) über eine bewegliche Verbindung zu einer Laufwageneinheit (18) zusammengefaßt ist, und mit Antrieben zum Verfahren der Laufwagen (16, 17) auf den Schienen (11, 12), **dadurch gekennzeichnet, dass** die unteren Schienen (111 bis 113) sternförmig zueinander angeordnet und die oberen Schienen (12; 121 bis 123) bogenförmig ausgebildet und auf einer Kreisbahn miteinander fluchtend ausgerichtet sind, daß die bewegliche Verbindung als Drehlager oder gelenkige Verbindung ausgebildet ist, und dass jeder Laufwageneinheit (18) einer der Antriebe zugeordnet und als ein zwischen oberem Laufwagen (17) und Plattform (10) wirksamer Drehantrieb ausgeblidet ist, und die Plattform (10) durch entsprechende Ansteuerung der Antriebe bewegbar ist.

2. Bewegungssystem nach Anspruch 1, **dadurch gekennzeichnet, daß** mindestens drei untere Schienen (111 bis 113), die um vorzugsweise gleiche Drehwinkel zueinander versetzt radial ausgerichtet sind, und eine gleiche Zahl oberer Schienen (121 bis 123) vorgesehen sind, die konzentrisch zur Hochachse (13) der Plattform (10) angeordnet sind.

3. Bewegungssystem nach Anspruch 1 oder 2, **dadurch gekennzeichnet, daß** die bogenförmigen oberen Schienen (121 bis 123) endseitig aneinanderstoßen und eine einstückige Kreisschiene (12) bilden.

4. Bewegungssystem nach einem der Ansprüche 1 bis 3, **dadurch gekennzeichnet, daß** die Plattform (10) kreisförmig ausgebildet ist und die oberen Schienen (121 bis 123; 12) konzentrisch zur Hochachse (13) der Plattform (10) angeordnet sind.

5. Bewegungssystem nach einem der Ansprüche 1 bis 4, **dadurch gekennzeichnet, daß** die unteren Schienen (111 bis 113) in einer Ebene angeordnet sind und daß die bewegliche Verbindung zwischen den Laufwagen (16, 17) einer Laufwageneinheit (18) als Drehlager (24) mit zur Hochachse (13) der Plattform (10) paralleler Lagerachse ausgebildet ist.

6. Bewegungssystem nach einem der Ansprüche 1 bis 4, **dadurch gekennzeichnet, daß** die unteren Schienen (111 bis 113) auf keilförmig ansteigenden Rampen (15) oder auf der inneren Trichterwand einer trichterförmigen Grundkonsole befestigt sind und daß die gelenkige Verbindung zwischen den Laufwagen (16, 17) einer Laufwageneinheit (18) drei orthogonale Rotationsachsen aufweist und vorzugsweise durch ein Kugelgelenk (25) realisiert ist.

7. Bewegungssystem nach einem der Ansprüche 1 bis 6, **dadurch gekennzeichnet, daß** an der Plattform (10) eine zu deren Hochachse (13) konzentrische, kreisbogenförmige Zahnleiste (23) angeordnet ist und daß jeder Drehantrieb einen am oberen Laufwagen (17) gehaltenen elektrischen Getriebemotor (21) aufweist, der mit einem auf der Getriebeabtriebswelle sitzenden Zahnritzel (22) mit der Zahnleiste (23) kämmt.

8. Bewegungssystem nach Anspruch 7, **dadurch gekennzeichnet, daß** jeder obere Laufwagen (17) zwei Gleit- oder Rollenschuhe (20) aufweist, die mit Abstand voneinander auf der Oberseite eines Trägers (19) angeordnet sind und die oberen Schiene (12) übergreifen, und daß der Träger (19) auf seiner Oberseite mittig den Getriebemotor (21) und auf seine Unterseite mittig die bewegliche Verbindung trägt.

9. Bewegungssystem nach einem der Ansprüche 1 bis 8, **dadurch gekennzeichnet, daß** jeder Drehantrieb als ein auf der Unterseite (10a) der Plattform (10) angeordneter Riementrieb (27) ausgebildet ist, der eine elektromotorisch angetriebene Antriebswalze (28) und eine davon in Umfangsrichtung der Plattform (10) beabstandet angeordnete Umlenkrolle (29) sowie ein über Antriebswalze (28) und Umlenkrolle (29) geführtes Endlosband (30) aufweist, und daß der obere Laufwagen (17) der zugeordneten Laufwageneinheit (18) an dem Endlosband (30) befestigt ist.

10. Bewegungssystem nach Anspruch 9, **dadurch gekennzeichnet, daß** das Endlosband (30) zwischen Antriebswalze (28) und Umlenkrolle (29) auf einem Kreisbogen geführt und hierzu Führungsrollen (31) an der Unterseite (10a) der Plattform (10) längs eines Kreisbogenabschnitts voneinander beabstandet angeordnet sind.

11. Bewegungssystem nach einem der Ansprüche 1 bis 10, **dadurch gekennzeichnet, daß** die Plattform (10) aus gleichen Kreissegmenten (101 bis 103) zusammengesetzt ist.

## Claims

1. Movement system for moving a platform (10), in particular a device for simulating vehicle movements, with a platform (10), in particular for mounting a vehicle cab, with rails (11, 12) arranged in two planes of motion lying one above another, of which the lower rails are laid spatially fixed and the upper rails are fixed on the underside of the platform (10) facing the lower rails (11), with carriages (16, 17) traversable on the rails (11, 12), one each of which carriages is assigned to a rail and each of the upper carriages (17) traversable on the upper rails (12) is combined by way of a moving connection with a lower carriage (16) traversable on the lower rails (11) to form a carriage unit (18), and with drives for traversing the carriages (16, 17) on the rails (11, 12), **characterized in that** the lower rails (111 to 113) are arranged radially in relation to one another and the upper rails (12; 121 to 123) are of curved design and are oriented in alignment with one another on a circular path, that the moving connection is embodied as a pivot bearing or articulated connection and that one of the drives is assigned to each carriage unit (18) and is embodied as a rotational drive acting between the upper carriage (17) and the platform (10), and that the platform (10) can be moved through corresponding actuation of the drives.

2. Movement system according to Claim 1, **characterized in that** at least three lower rails (111 to 113), which are oriented radially offset, preferably by the same angle of rotation, in relation to one another, and an equal number of upper rails (121 to 123) are provided, which are arranged concentrically with the vertical axis (13) of the platform (10).

3. Movement system according to Claim 1 or 2, **characterized in that** the curved upper rails (121 to 123) abut one another at the ends and form an integral circular rail (12).

4. Movement system according to one of Claims 1 to 3, **characterized in that** the platform (10) is of circular design and the upper rails (121 to 123; 12) are arranged concentrically with the vertical axis (13) of the platform (10).

5. Movement system according to one of Claims 1 to 4, **characterized in that** the lower rails (111 to 113) are arranged in one plane and that the moving connection between the carriages (16, 17) of a carriage unit (18) are embodied as pivot bearings (24) having a bearing axis parallel to the vertical axis (13) of the platform (10).

6. Movement system according to one of Claims 1 to 4, **characterized in that** the lower rails (111 to 113) are fixed on ramps (15) rising in a wedge shape or on the inner funnel wall of a funnel-shaped base console and that the articulated connection between the carriages (16, 17) of a carriage unit (18) has three orthogonal axes of rotation and is preferably provided by a ball joint (25).

7. Movement system according to one of Claims 1 to 6, **characterized in that** a circular arc-shaped toothed band (23), which is concentric with the vertical axis (13) of the platform, is arranged on the platform (10) and that each rotational drive comprises an electric geared motor (21), which is held on the upper carriage (17) and which with a toothed pinion (22) seated on the transmission output shaft meshes with the toothed band (23).

8. Movement system according to Claim 7, **characterized in that** each upper carriage (17) comprises two slide or roller shoes (20), which are arranged at an interval from one another on the upper side of a carrier (19) and which grip around the upper rail (12), and that the carrier (19) carries the geared motor (21) centrally on its upper side and the moving connection centrally on its underside.

9. Movement system according to one of Claims 1 to 8, **characterized in that** each rotational drive is embodied as a belt drive (27), which is arranged on the underside (10a) of the platform (10) and which comprises an electric motor-driven drive roller (28) and a return sheave (29) arranged at an interval therefrom in the circumferential direction of the platform (10), together with a continuous belt (30) guided over the drive roller (28) and the return sheave (29), and that the upper carriage (17) of the assigned carriage unit (18) is fixed to the continuous belt (30).

10. Movement system according to Claim 9, **characterized in that** between the drive roller (28) and the return sheave (29) the continuous belt (30) is guided on a circular arc and for this purpose guide rollers (31) are arranged at intervals from one another on the underside (10a) of the platform (10) along a circular arc portion.

11. Movement system according to one of Claims 1 to 10, **characterized in that** the platform (10) is assembled from identical circular segments (101 to 103).

## Revendications

1. Système à mouvement pour le mouvement d'une plate-forme (10), en particulier dispositif pour la simulation de mouvements de véhicules, avec une plate-forme (10), destinée en particulier à recevoir une cabine de véhicule, avec des rails (11, 12) disposés dans deux plans de mouvement situés l'un au-dessus de l'autre, parmi lesquels les rails inférieurs sont posés de façon fixe dans l'espace et les rails supérieurs sont fixés sur le côté inférieur de la plate-forme (10) tourné vers les rails inférieurs (11), avec des chariots (16, 17) déplaçables sur les rails (11, 12), dont l'un est respectivement associé à un rail et chacun des chariots supérieurs (17) déplaçables sur les rails supérieurs (12) est assemblé en une unité de chariot (18) au moyen d'une liaison mobile avec un des chariots inférieurs (16) déplaçables sur les rails inférieurs (11), et avec des entraînements pour le déplacement des chariots (16, 17) sur les rails (11, 12), **caractérisé en ce que** les rails inférieurs (111 à 113) sont disposés en forme d'étoile l'un par rapport à l'autre et les rails supérieurs (12; 121 à 123) sont réalisés en forme d'arc et sont orientés en alignement les uns avec les autres sur une trajectoire circulaire, **en ce que** la liaison mobile est réalisée sous la forme d'un palier pivotant ou d'une liaison articulée, et **en ce qu'**un des entraînements est associé à chaque unité de chariot (18) et est réalisé sous la forme d'un entraînement rotatif agissant entre le chariot supérieur (17) et la plate-forme (10), et la plate-forme (10) est déplaçable par une commande correspondante des entraînements.

2. Système à mouvement selon la revendication 1, **caractérisé en ce qu'**il est prévu au moins trois rails inférieurs (111 à 113), qui sont orientés radialement avec un décalage l'un par rapport à l'autre d'un angle de rotation de préférence égal, et un nombre égal de rails supérieurs (121 à 123), qui sont disposés de façon concentrique par rapport à l'axe vertical (13) de la plate-forme (10).

3. Système à mouvement selon la revendication 1 ou 2, **caractérisé en ce que** les rails supérieurs en forme d'arc (121 à 123) se touchent mutuellement à leurs extrémités et forment un rail circulaire d'une seule pièce (12).

4. Système à mouvement selon l'une quelconque des revendications 1 à 3, **caractérisé en ce que** la plate-forme (10) est réalisée sous forme circulaire et les rails supérieurs (121 à 123; 12) sont disposés de façon concentrique par rapport à l'axe vertical (13) de la plate-forme (10).

5. Système à mouvement selon l'une quelconque des revendications 1 à 4, **caractérisé en ce que** les rails inférieurs (111 à 113) sont disposés dans un plan et **en ce que** la liaison mobile entre les chariots (16, 17) d'une unité de chariot (18) est réalisée sous la forme d'un palier pivotant (24) avec un axe de palier parallèle à l'axe vertical (13) de la plate-forme (10).

6. Système à mouvement selon l'une quelconque des revendications 1 à 4, **caractérisé en ce que** les rails inférieurs (111 à 113) sont fixés sur des rampes ascendantes en forme de coin (15) ou sur la paroi d'entonnoir intérieure d'une console de base en forme d'entonnoir et **en ce que** la liaison articulée entre les chariots (16, 17) d'une unité de chariot (18) présente trois axes de rotation et est réalisée de préférence sous la forme d'une rotule (25).

7. Système à mouvement selon l'une quelconque des revendications 1 à 6, **caractérisé en ce qu'**une crémaillère en forme d'arc de cercle (23) est disposée sur la plate-forme (10), de façon concentrique par rapport à l'axe vertical (13) de celle-ci, et **en ce que** chaque entraînement rotatif présente un moto-réducteur électrique (21), maintenu sur le chariot supérieur (17), qui s'engrène avec la crémaillère (23) au moyen d'un pignon denté (22) calé sur l'arbre de sortie du moto-réducteur.

8. Système à mouvement selon la revendication 7, **caractérisé en ce que** chaque chariot supérieur (17) présente deux patins de glissement ou de roulement (20), qui sont disposés à distance l'un de l'autre sur le côté supérieur d'un support (19) et qui chevauchent les rails supérieurs (12), et **en ce que** le support (19) porte au milieu de son côté supérieur le moto-réducteur (21) et au milieu de son côté inférieur la liaison mobile.

9. Système à mouvement selon l'une quelconque des revendications 1 à 8, **caractérisé en ce que** chaque entraînement rotatif est réalisé sous la forme d'un entraînement à courroie (27) disposé sur le côté inférieur (10a) de la plate-forme (10), lequel présente un rouleau d'entraînement (28) entraîné par un moteur électrique et un rouleau de renvoi (29) disposé à distance de celui-ci dans la direction périphérique de la plate-forme (10) ainsi qu'une bande sans fin (30) guidée sur le rouleau d'entraînement (28) et le rouleau de renvoi (29), et **en ce que** le chariot supérieur (17) de l'unité de chariot associée (18) est fixé sur la bande sans fin (30).

10. Système à mouvement selon la revendication 9, **caractérisé en ce que** la bande sans fin (30) est guidée entre le rouleau d'entraînement (28) et le rouleau de renvoi (29) sur un arc de cercle, et des rouleaux de guidage (31) sont disposés à cet effet à distance l'un de l'autre sur le côté inférieur (10a) de la plate-forme (10) le long d'une section d'arc de cercle.

11. Système à mouvement selon l'une quelconque des revendications 1 à 10, **caractérisé en ce que** la plate-forme (10) est composée de segments circulaires égaux (101 à 103).
